# EUROPEAN PATENT SPECIFICATION

(11) **EP 1 405 663 B1**
(45) Date of publication and mention of the grant of the patent: **21.07.2010**
(21) Application number: 03022504.9
(22) Date of filing: 02.10.2003
(51) Int. Cl.: B01D 53/32, F01N 3/01, B01J 19/08

(54) **Method and device for gas purifying by combined use of plasma treatment and filtration**
Verfahren und Vorrichtung zur Gasreinigung mittels kombinierter Anwendung von Plasmabehandlung und Filtration
Procédé et dispositif pour la purification de gaz au moyen d'une utilisation combinée de traitement au plasma et de filtration

(30) Priority: 02.10.2002 JP 2002289981; 28.02.2003 JP 2003054888
(43) Date of publication of application: 07.04.2004
(73) Proprietor: KABUSHIKI KAISHA TOSHIBA, Tokyo (JP)
(72) Inventor: Yasui, Hiroyuki, Toshiba Corporation, Tokyo (JP); Araki, Kuniyuki, Toshiba Corporation, Tokyo (JP); Hida, Yoshio, Toshiba Corporation, Tokyo (JP)
(74) Representative: HOFFMANN EITLE

(56) References cited:
- EP-A- 1 544 425
- WO-A-00/51714
- WO-A-01/04467
- WO-A-01/92694
- WO-A-98/48922
- WO-A-99/32214
- WO-A-99/43419
- WO-A-03/018176
- PATENT ABSTRACTS OF JAPAN 27 May 1994 (1994-05-27) & JP 1994 061468 A (MASUDA SENICHI),

## Description

### BACKGROUND OF THE INVENTION

### Field of The Invention

The present invention relates to a gas purifying system or facility and a gas purifying method for purifying an object gas to be purified by removing adverse or harmful material or substance such as particulate matter and nitrogen oxide contained in the object gas. The present invention also relates to a discharge reaction apparatus utilized for the gas purifying system or method mentioned above.

### Relevant Art

In a conventional art, there are known some gas purifying systems or facilities for purifying an exhaust gas discharged from an engine or like by removing particulate matter or material (PM), nitrogen oxide (NOx) and the like contained in the exhaust gas.

For example, there is known a gas purifying system for removing the PM, in which a particulate matter (PM) removing filter is arranged in a gas flow path through which the exhaust gas containing the PM flows to thereby trap or catch the PM. Then, burnable material such as carbon contained in the PM trapped by the PM removing filter is burned and then removed, and thereafter, the PM removing filter is regenerated in function. Such gas purifying system is disclosed in Japanese Patent Laid-open (KOKAI) Publication No. HEI 11-062558.

On the other hand, there is also known a gas purifying system for removing the NOx, in which a three way catalyst which reduces and decomposes the NOx is arranged in a gas flow path through which an exhaust gas containing the NOx flows. Such three way catalyst carries noble metal such as Pt for activation. Such gas purifying system is disclosed in Japanese Patent Laid-open (KOKAI) Publication No. 2002-045701.

In the gas purifying system for removing the PM such as disclosed in Japanese Patent Laid-open (KOKAI) Publication No. HEI 11-062558, it is required to heat the gas at a temperature of about 600°C for removing carbon or like material contained in the PM caught by the PM removing filter through the combustion reaction with oxygen.

On the other hand, in the gas purifying system for removing the NOx such as disclosed in Japanese Patent Laid-open (KOKAI) Publication No. 2002-045701, a reduction catalyst attains its function generally at a temperature of more than about 300°C. At a temperature of less than 300°C of the exhaust gas, the catalyst is less activated and the NOx will be not able to sufficiently reduced and decomposed. Moreover, harmful dinitrogen monoxide (N₂O) will be generated during the reduction and decomposition process of the NOx.

Therefore, in both types of the gas purifying systems of the prior art mentioned above, an external heater or like as a heating source for heating the exhaust gas is required to be equipped with. In addition, in a case where the exhaust gas is of a low temperature (especially, less than 200°C), the PM and/or NOx cannot be effectively and sufficiently trapped and removed.

WO 00/51714 discloses a reactor for plasma-assisted processing of gaseous media. The reactor includes a pair of electrodes having facing surfaces. A space between the electrodes is divided into a plurality of gas passages extending between the facing surfaces of the electrodes and spaced apart from each other in a direction transverse to the facing surface of the electrodes. Thereby a substantially uniform distribution of the electric field occurs across the space between the electrodes. Particulate matter, which passes between the two facing electrodes, is removed by the discharge plasma therebetween.

WO 98/48922 discloses a device and method for decomposing harmful substances contained in flue gas. The device comprises at least one processing station with at least two electrodes. One of the at least two electrodes is a porous and gas-permeable electrode. In order to decompose harmful substances, the flue gas is introduced through one end of the processing station formed by the two electrodes and through the porous electrode, while the other end of the processing station is closed.

WO 01/92694 discloses a plasma system for removing soot and Noₓ in exhaust gas from diesel engines. The system comprises a diesel particulate filter for accommodating a honeycomb-type porous element and at least one pair of electrodes. A plasma reactor for creating a predetermined amount of plasma is mounted downstream or upstream of the diesel particulate filter.

### SUMMARY OF THE INVENTION

It is therefore an object of the present invention to substantially eliminate defects or drawbacks encountered in the prior art mentioned above and to provide a gas purifying system and a gas purifying method capable of effectively removing particular matter and harmful substance such as nitrogen oxide from an object gas to be purified at a low temperature without heating the gas to thereby purifying the object gas.

Another object of the present invention is to provide a discharge reaction apparatus utilized for such gas purifying system as mentioned above to effectively remove the particular matter and harmful substance.

These and other objects can be achieved according to the present invention by providing, in one aspect, a gas purifying system according to claim 1.

The dependent claims define further embodiments of the invention.

In another aspect of the present invention, there is provided a gas purifying method of purifying an object gas according to the independent method claim.

According to the structures and/or characters of the present invention mentioned above, the object gas to be purified by trapping and removing the particular matter (PM) and harmful substance from the object gas to be purified without heating at low temperature.

Moreover, the NOx reduction decomposition at a low temperature can be performed without heating, in addition to the PM trapping and combustion treatment, by adding reduction decomposition catalyst.

The nature and further characteristic features will be made more clear from the following descriptions made with reference to the accompanying drawings.

### BRIEF DESCRIPTION OF THE DRAWINGS

In the accompanying drawings:
Fig. 1 is a schematic view showing an arrangement of a gas purifying system according to a first aspect of the present invention;
Fig. 2 A is a longitudinal partial sectional view, in an enlarged scale, of a discharge reaction device of the first embodiment of Fig. 1, and Figs. 2B to 2D are sectional views of a filter member of the gas purifying system of the present invention;
Fig. 3 is a chart showing reduction decomposition of NOx in the discharge reaction device;
Fig. 4 is a graph representing a relationship between NOx lowering amount and a temperature of an object gas to be purified at a time when the NOx contained in the object gas includes 15 vol% of oxygen;
Fig. 5 is a graph representing a relationship between NOx lowering amount and a temperature of an object gas to be purified at a time when the NOx contained in the object gas includes 1 vol% of oxygen;
Fig. 6 is a graph representing a relationship between by-product amount of N₂O and a temperature of an object gas to be purified at a time when the NOx contained in the object gas includes 1 vol% of oxygen;
Fig. 7 is a schematic view showing an arrangement of a gas purifying system according to a second aspect of the present invention;
Fig. 8 is a schematic view showing a first modification of the gas purifying system of the embodiment of Fig. 7;
Fig. 9 is a schematic view showing a second modification of the gas purifying system of the embodiment of Fig. 7;
Fig. 10 is a schematic view showing a third modification of the gas purifying system of the embodiment of Fig. 7;
Fig. 11 is a schematic view showing an arrangement of a gas purifying system according to a third aspect of the present invention;
Fig. 12 is a schematic view showing an arrangement of a gas purifying system according to a fourth aspect of the present invention;
Fig. 13 is a schematic view showing an arrangement of a gas purifying system according to a fifth aspect of the present invention; and
Fig. 14 is a schematic view showing an arrangement of a gas purifying system according to a sixth aspect of the present invention.

### DETAILED DESCRIPTION OF THE DRAWINGS

Aspects of a gas purifying system and a gas purifying method, utilizing a discharge reaction device or apparatus, for the gas purifying system according to the present invention will be described hereunder with reference to the accompanying drawings.

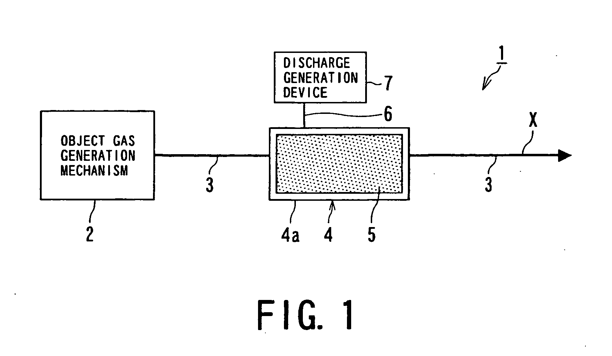

Referring to Fig. 1, showing a first aspect of the gas purifying system according to the present invention.

The gas purifying system 1 includes a discharge reaction device 4 provided on the way of a gas flow line or path 3 extending from an object gas generating mechanism 2, and a filter member or structure 5 disposed in a reaction container 4a of the discharge reaction device 4. The filter member 5 has a structure permitting an object gas X to be purified (merely called hereinlater object gas) to flow through the inside thereof and having particulate matter trapping structure and function for trapping PM (Particulate Matter) and/or a harmful substance included in the object gas X.

Specific examples of the object gas generating mechanism 2 are of an in-vehicle diesel engine and gasoline engine such as automotive engine, a vehicle generator drive motor and a ship propulsion motor and the like; the diesel engine and gasoline engine to generate power that are mounted on a movable body such as vehicle, ship and aircraft and the like; and the fixed diesel engine and the gas engine (gas motor) used for co-generation (electro-thermal provision) system and the power generation system.

These object gas generating mechanisms 2 use heavy oils, such as, A-heavy oil, C-heavy oil and the like, light oil, gasoline, city gas, methane, and propane, and discharge exhaust gasses that are called as the object gas X in the present invention.

Further, a discharge generating power source (discharge generation device) 7 is connected to the discharge reaction device 4 via an electric cable 6. The voltage application from this discharge generation device 7 causes discharge plasma to be generated at the discharge reaction device 4, while, the PM is trapped within the filter member 5 in accordance with electrical dust collecting function by an electric field generated. Further, radical oxide such as O, OH and O₃ and the like are formed by the discharge plasma, and the trapped PM is burned through oxidation of the radical oxide. Then the trapped PM is changed into CO₂ through a combustion treatment.

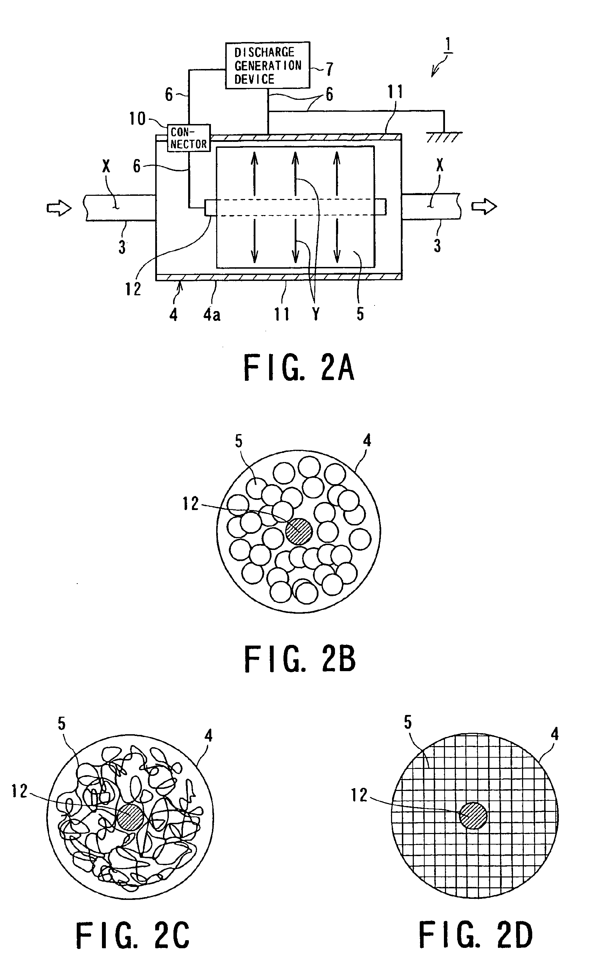

Fig. 2A is a schematic longitudinal section showing the gas purifying system 1, particularly, discharge reaction device 4.

For instance, cylindrical discharge reaction device 4 is arranged on the way of the tubular gas flow line 3. Further, for instance, block shaped filter member 5 is provided within the discharge reaction device 4, and a connector 10 made of insulating material is provided on the side wall section 11 of the discharge reaction device 4.

In addition, there is provided a rod shaped electrode 12 extending in a longitudinal direction of the discharge reaction device 4 inside the filter member 5.

On the other hand, the discharge generation device 7 is arranged on the outside of the discharge reaction device 4, and one electrode of this discharge generation device 7, for example, on a high voltage electrode side, is connected to the connector 10 via the electric cable 6. Further, the connector 10 and the electrode rod 12 are connected via the cable 6.

The other one electrode of the discharge generation device 7, on a grounding electrode side, is connected to side wall surface 11 of the discharge reaction device 4 via the electric cable 6 and it is grounded. That is, the inside wall surface 11 of the discharge reaction device 4 operates as the grounding electrode.

The discharge generation device 7 is constituted by, for instance, a primary source and a secondary source. The primary source is of AC power source of Φ 50Hz, 60Hz at AC 100V, 200V, 400V, or DC power source of battery and the like at DC 12V, 24V, and on the other hand, as the secondary power source, the pulse power source, high frequency power source and power-frequency AC power source may be used.

According to the structure mentioned above, when the voltage is applied from the discharge generation device 7, the electric field is caused towards the side wall surface 11 of the discharge reaction device 4 from the electrode rod 12 in the filter member 5 of the discharge reaction device 4 and discharge plasma Y is also generated. The voltage application to the electrode rod 12 is of, for example, several kilovolts to few score kilovolts.

However, it is to be noted that polarity of the applied voltage from the discharge generation device 7, and shapes and number of the discharge reaction device 4, the filter member 5, and the electrode rod 12 are optional or arbitrary. In addition, an electrode may be arranged independently from the side wall surface 11 of the discharge reaction device 4. That is, various structure may be adopted as far as the electric field and the discharge plasma Y could be caused or generated in the filter member 5.

Moreover, it is possible to generate the discharge plasma Y without heating the object gas X by being used as a low-temperature plasma with high electron temperature. The use of the low-temperature plasma permits the power applied to the discharge reaction device 4 to be utilized as the electron energy in the inside of the discharge reaction device 4, and the power is not utilized as the thermal energy of neutral molecule and ion. As such low temperature, a temperature of less than 300°C will be preferably utilized in terms of catalyst activation. For this reason, the energy loss is reduced, the low power activates electron, and it is possible to generate larger number of radical oxides.

Further, the filter member 5 may have a structure in which a plurality of ceramic pellets of solid material having spherical, columnar, cylindrical, or disc shape are filled up in a cylindrical or box-shaped and its opening is packed with a netting or a filter, or have a structure which is filled with fibrous material. The filter member 5 may be formed in honey-comb structure or in monolith structure.

In this regard, in the case of the discharge reaction device 4 having annular cylindrical structure and provided with the filter member 5, Fig. 2B is a sectional view of a structure utilizing a plurality of solid materials 5, Fig. 2C is a sectional view of a structure utilizing a fibrous material 5 and Fig. 2D is a sectional view of a honey-comb or monolith structure 5.

The gas purifying system 1 according to the first embodiment mentioned above will be operated in a manner described hereunder.

First, the object gas X, to be purified, containing the particular matter (PM) is generated in the object gas generating mechanism 2, and the generated object gas X is introduced to the discharge reaction device 4 through the gas flow line or path 3.

The object gas X flowing inside of the discharge reaction device 4 then passes the filter member 5.

In the filter member 5 within the discharge reaction device 4, the electric field is formed and the electric discharge plasma Y is generated in accordance with the operation of the discharge generation device 7. Accordingly, the PM included in the object gas X to be purified is trapped in the filter member 5 in accordance with the electric collecting function of the electric field formed inside the filter member 5.

Further, in the inside section of the filter member 5, the radical oxides such as O, OH, O₃ and the like are generated in accordance with the operation or function of the discharge plasma Y. When the low-temperature plasma is generated as the discharge plasma Y, high energy electrons and molecules of the object gas X collide with each other to thereby generate the radical oxides. Then, according to the operation of such radial oxide, the material such as carbon and the like included in the PM trapped by the filter member 5 is subjected to combustion treatment sequentially, resulting in the carbon dioxide CO₂, so as to recover the PM trapping function of the filter member 5.

The object gas X after removing the PM is discharged externally of the discharge reaction device 4.

Incidentally, when the filter member 5 is constituted by a dielectric substance having dielectric constant of more than 3, the electric field formed in the inside section of the discharge reaction device 4 is further stiffened, and it is possible to improve the electric collecting function and trapping efficiency of the PM. As a preferable example, ceramics such as alumina having dielectric constant of 9-10 will be utilized in terms of heat resisting property.

On the other hand, in a case where the object gas X to be purified, which is discharged from the object gas generation mechanism 2, includes NOx (90vol% of NO) or hydrocarbon (CxHy), the discharge reaction device 4 generates chemical species such as NO₂ which is generated through the oxidation of the radical oxide generated by the discharge plasma Y, and generates the partial oxidant [CHO] which is generated through the oxidation of the hydrocarbon through the operation of the radical oxide. These chemical species make it possible to decompose NOx while performing reductive reaction efficiently between the chemical species and the NOx included in the object gas X not only at high temperature but also at low temperature under the presence of reduction decomposition catalyst.

For this reason, in addition to the trapping and combustion treatment of the PM, the reduction decomposition of the NOx can be performed without heating the NOx by the use of the reduction decomposition catalyst corresponding to the chemical species generated inside the discharge reaction device 4 as the material of the filter member 5.

Incidentally, although the material of the filter member 5 is formed of the NOx reduction decomposition catalyst, it is also preferable to carry the NOx reduction decomposition catalyst with the filter member 5.

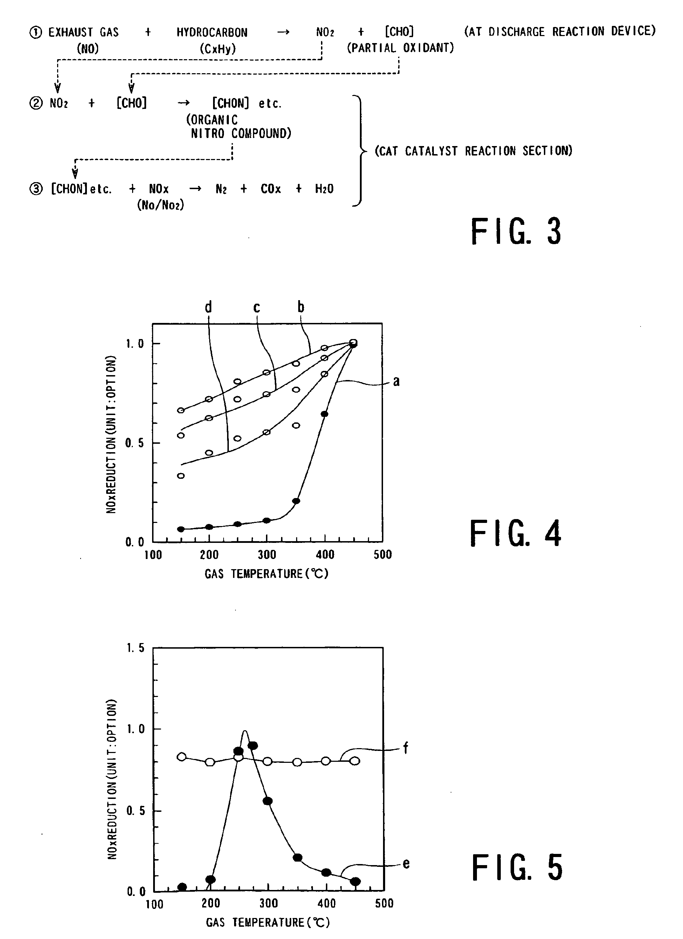

Fig. 3 is a diagram showing the NOx reduction decomposition at the discharge reaction device 4 of the gas purifying system 1 shown in Fig. 1.

With reference to Fig. 3, the NOx included in the object gas X as an exhaust gas in which, generally, NO occupies 90vol% of the NOx. Furthermore, in a case where the hydrocarbon (CxHy) is further included in the object gas X, NO₂ and partial oxidant [CHO] are generated in which the NO and the CxHy are oxidized by the presence of the radical oxide generated by the discharge plasma Y in the discharge reaction device 4.

These chemical species generated in the discharge reaction device 4 operate as catalyst reaction activation species on the catalyst surface. The discharge reaction device 4 generates organic nitro compound [CHON] etc. from the NO₂ and [CHO]. Then, reaction between the [CHON] etc. and NOx (NO/NO₂) generates N₂, COX and H₂O, resulting in NOx reduction decomposition.

As the reduction decomposition catalyst of the NOx, for instance, γ -alumina may be provided. In the use of three way catalyst carried with noble metal such as Pt and the like that are used conventionally as the reduction decomposition catalyst to the NOx, harmful N₂O is generated in the decomposition of the NOx. However, in the use of the γ-alumina, it is possible to reduce the NO₂ generation amount.

That is, in the conventional art, the three way catalyst has been used to decompose the NOx, and the three way catalyst carried with a noble metal such as Pt for the catalytic activation. However, the gas purifying system 1 of the first embodiment of the present invention can perform the NOx reduction decomposition of not only at high temperature but also at normal temperature without using the noble metal such as Pt for activation, because the discharge reaction device 4 of the gas purifying system 1 generates the chemical species as the catalyst reaction activation species such as NO₂, and the partial oxidized substance ([CHO]) of the hydrocarbon and the like. For this reason, the gas purifying system 1 can reduce amount of the N₂O as by-product material generated at the time of the NOx reduction decomposition.

Fig. 4 is a graph representing relationship between lowering amount of NOx and temperature of the object gas X at a time of the reduction decomposition of the NOx included in the object gas X with 15 vol% content of oxygen O₂.

In Fig. 4, the axis of ordinate indicates the lowering amount (arbitrary unit) of the NOx, and the axis of abscissa indicates the temperature (°C) of the object gas to be purified. In the graph, symbol **●** indicates data of NOx lowering curve showing lowering amount of NOx when performing reduction decomposition of the NOx by using the catalyst (γ -alumina) effective for NOx reduction decomposition at only a high. temperature without providing noble metal, and symbol ○ indicates data of NOx lowering curves b, c and d showing the NOx lowering amount when performing the reduction decomposition of the NOx by the low-temperature plasma and by using the reduction decomposition catalyst (γ -alumina catalyst) having a chemical species generated, as the reaction species, through the operation of the low-temperature plasma.

There are also shown the NOx lowering curves b, c and d showing three types NOx lowering amounts by changing electric energy of the low-temperature plasma.

As shown in Fig. 4, in the independent use of the catalyst (γ -alumina) effective for NOx reduction decomposition at only a high temperature without providing noble metal, the lowering amount depends on the temperature of the object gas X in which a large inclination between the temperature and the lowering amount of the NOx is indicated in a range of 300 to 500°C, and the lowering amount of the NOx is remarkably reduced at not more than 300°C.

On the other hand, in the reduction decomposition method of the NOx contained in the object gas X by low-temperature plasma and by using the reduction decomposition catalyst (γ -alumina catalyst) having a chemical species, as reaction species, generated by the low-temperature plasma and through the operation of the low-temperature plasma, the NOx lowering amount depends on the temperature of the object gas X. However, the inclination between the temperature of the object gas X and the NOx lowering amount becomes smaller than that in a case using only the catalyst. For this reason, it is possible to reduce a certain amount of NOX at a low temperature not more than 200°C .

Further, in the NOx reduction decomposition method by using the low-temperature plasma and the reduction decomposition catalyst, the change of NOx lowering amount depends on the electric energy scale of the low-temperature plasma. That is, with increasing the electric energy of the low-temperature plasma, the NOx lowering amount increases. Therefore, it is possible to control the NOx lowering amount depending on NOx amount contained in the object gas X to be purified or temperature change.

Fig. 5 is a graph representing a relationship between the NOx lowering amount and the temperature of the object gas X to be purified at a time of performing the reduction decomposition of the NOx contained in the object gas X of 1 vol% content of oxygen O₂.

in Fig. 5, the axis or ordinate indicates the lowering amount (arbitrary unit) of the NOx and the axis of abscissa indicates the temperature (°C). In the graph, symbol ● indicates data of NOx lowering curve e showing lowering amount of NOx when performing reduction decomposition of the NOx included in the object gas X by using the conventional three way catalyst, and a symbol ○ indicates data of NOx lowering curves f showing NOx lowering amount when performing reduction decomposition of the NOx included in the object gas X by the low-temperature plasma and by using the reduction decomposition catalyst having the chemical species generated, as reaction species, through the operation of the low-temperature plasma.

As shown in Fig. 5, as to the object gas X with 1 vol% oxygen O₂ content, the NOx lowering amount depends on the temperature of the object gas X to be purified, and the large inclination between temperature and NOx lowering amount is indicated in a range of 200°C to 400°C, which tends that the maximum value exists.

On the other hand, in the method for performing the reduction decomposition of the NOx by the low-temperature plasma and the reduction decomposition catalyst, the NOx amount can be reduced by a certain amount without depending on the temperature of the object gas X to be purified.

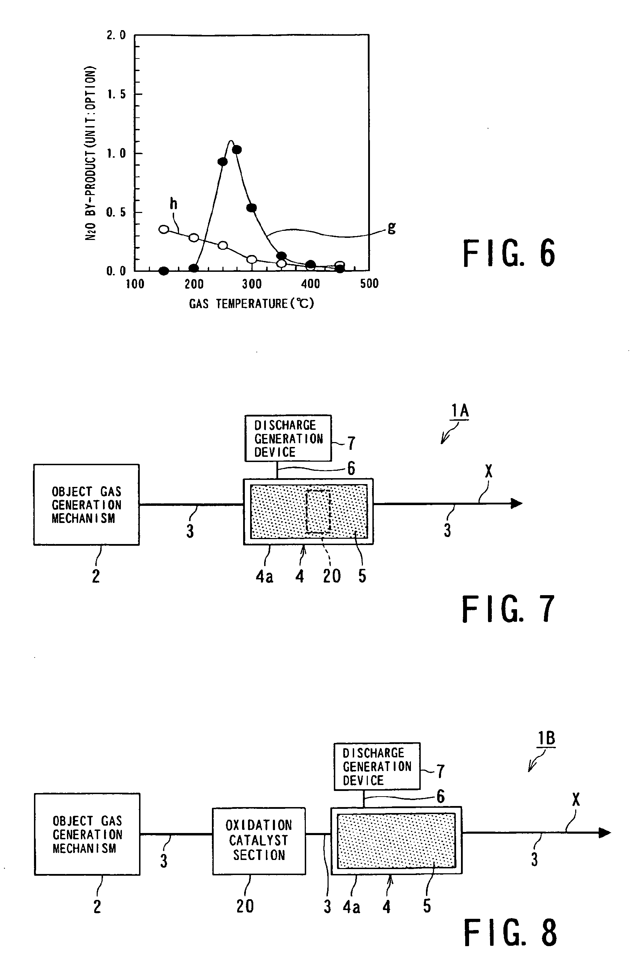

Fig. 6 is a graph representing a relationship between N₂O by-product amount and the temperature of the object gas X to be purified at a time of performing the reduction decomposition of NOx included in the object gas X with 1 vol% oxygen O₂ content.

In Fig. 6, the axis of ordinate indicates N₂O by-product amount (arbitrary unit) and the axis ob abscissa indicates temperature (°C) of the object gas X. In the graph, a symbol ● indicates data of N₂O lowering curve g showing the N₂O by-product amount when performing the reduction decomposition of the NOx included in the object gas X by the conventional three way catalyst, and a symbol ○ indicates data of the N₂O lowering curves h showing the N₂O by-product amount when performing the reduction decomposition of the NOx included in the object gas X by the low-temperature discharge plasma and by using the reduction decomposition catalyst having the chemical species generated, as reaction species, through the operation of the low-temperature plasma.

As shown in Fig. 6, in the method for performing the reduction decomposition of the NOx included in the object gas X by using the three way catalyst, the tendency substantially identical to that of Fig. 5 will be shown. That is, since the three way catalyst carries the noble metal such as Pt, the N₂O is produced as by-product depending on the NOx lowering amount.

On the other hand, in the method for performing the reduction decomposition of the NOx by using the low-temperature plasma and the reduction decomposition catalyst, the N₂O by-product amount tends to be lowered with increasing of the temperature of the object gas X. However, the changing amount of the N₂O by-product amount with respect to the temperature change of the object gas X is smaller than that in the case where the three way catalyst is utilized, which is not more than 50% of the peak amount of the N₂O by-product amount in the case of utilizing three way catalyst.

That is, the gas purifying system 1 of this embodiment causes the electric field inside the filter member 5 so as to trap the PM contained in the object gas X to be purified. Thus, according to the structure of the gas purifying system 1, the PM can be trapped by the electric PM collecting function in addition to the PM trapping function of the filter member 5.

The gas purifying system 1 of the described embodiment reproduces the PM collecting function of the filter member 5 through the combustion treatment of the PM trapped by the filter member 5 without heating the PM by utilizing the electric discharge plasma Y without depending on the temperature.

Furthermore, the gas purifying system 1 achieves to remove the NOx, from the object gas X, without heating the NOx , while performing the reduction decomposition of the NOx, as the chemical species generated from the hydrocarbon and NOx in the discharge reaction chamber 4 as the reaction activation species by adding the function as the reduction decomposition catalyst to the filter member 5.

In these days, the discharge regulation concerning the discharge of NOx or PM within exhaust gas from various engine sources has been made severe and strengthened. Because of this reason, recently, there has been proposed an apparatus, such as heater, for burning the PM with the heater while trapping the PM as a gas purifying system for removing the PM. On the other hand, there has also been proposed an apparatus for performing the reduction decomposition of NOx, through heating, by using the three way catalyst carrying the noble metal such as Pt as the gas purifying system for removing the NOx.

However, for these known gas purifying systems, it is necessary to heat the object gas X up to at least not less than normal temperature, for instance not more than 200°C. Particularly, when the gas purifying system is provided for an automobile and automobile exhaust gas is taken to as the object gas X to be purified, it is difficult to sufficiently and stably deal with the PM or the NOx because the exhaust gas temperature is changed in accordance with the running or traveling conditions.

For example, as the exhaust gas temperature is lower than temperature necessary for activation of the catalyst used for the PM burning or NOx reduction decomposition at the time of engine starting, engine low speed driving or engine accelerating, the decomposition reaction progresses not appreciably. For this reason, it has been necessary for the gas purifying system to additionally be equipped with an external heating source.

Further, when performing the reduction decomposition of NOx, through heating, by using the three way catalyst, it was necessary to carry the noble metal such as Pt for the activation of the three way catalyst, which, however, involves a problem that nitrogen monoxide (N₂O) is generated as by-product in the process of NOx reduction decomposition caused by the noble metal such as Pt.

However, the gas purifying system 1 of the present invention permits the PM included in the object gas X to be subjected to the combustion treatment continuously with high efficiency not only at high temperature but also at low temperature while trapping the PM with the filter member 5, by using the operation of the discharge plasma, that is hard to be subjected to influence of temperature change, or preferably, by using the low-temperature plasma.

Further, the NOx and the chemical species performing reductive reaction at a no high temperature are generated through the operation of the discharge plasma. Therefore, it becomes possible to perform the reduction decomposition of the NOx without heating, even at a low temperature, by constituting the filter member 5 using the NOx reduction decomposition catalyst.

Furthermore, according to the present invention, since it is not necessary for the gas purifying system 1 to use the noble metal for activating the NOx reduction decomposition catalyst, it becomes possible to reduce the generation amount of N₂O that is generated conventionally as a by-product at the time of the NOx reduction decomposition.

Accordingly, the gas purifying system 1 of this invention can purify the object gas X even in the use of various object gas generating mechanisms 2 which generate the object gas X including particular matter or harmful substance such as NOx and the like in accordance with the temperature change.

Fig. 7 is a schematic view showing a second aspect of the gas purifying system according to the present invention.

The gas purifying system 1A shown in Fig. 7 is different from the gas purifying system 1 of the first embodiment shown in Fig. 1 in that the gas purifying system 1A is provided with an oxidation catalyst (oxidizing catalyst unit or section) 20 inside the discharge reaction device 4 in addition to the filter member 5. The gas purifying system 1A is substantially identical to that of the first embodiment in the other structures or functions. Therefore, the same reference numerals or symbols are added to the corresponding portions and duplicated explanation is hence omitted.

The gas purifying system 1A of this second embodiment is provided with the oxidation catalyst 20 inside the discharge reaction device 4 in addition to the filter member 5 to be independently or to be provided for the filter member 5.

The structure of the gas purifying system 1A causes the PM trapped by the filter member 5 to be subjected to the combustion treatment in accordance with the operation or function of the oxidation catalyst 20 in addition to the radical oxide generated in accordance with the operation of the discharge plasma. For this reason, the gas purifying system 1A is capable of performing the combustion treatment to the PM more efficiently than the gas purifying system 1. shown in Fig. 1.

Figs. 8, 9 and 10 are schematic views showing first, second and third modified examples of the gas purifying system 1A shown in Fig. 7, respectively.

The gas purifying system 1B shown in Fig. 8 is provided with the oxidation catalyst (oxidizing unit or section) 20 on the way of the gas flow path or line 3 connecting the object gas generating mechanism 2 and the discharge reaction device 4. That is, the oxidation catalyst 20 is located to the gas flow line 3 on the upstream side of the discharge reaction device 4 instead of installing the oxidation catalyst 20 inside the discharge reaction device 4.

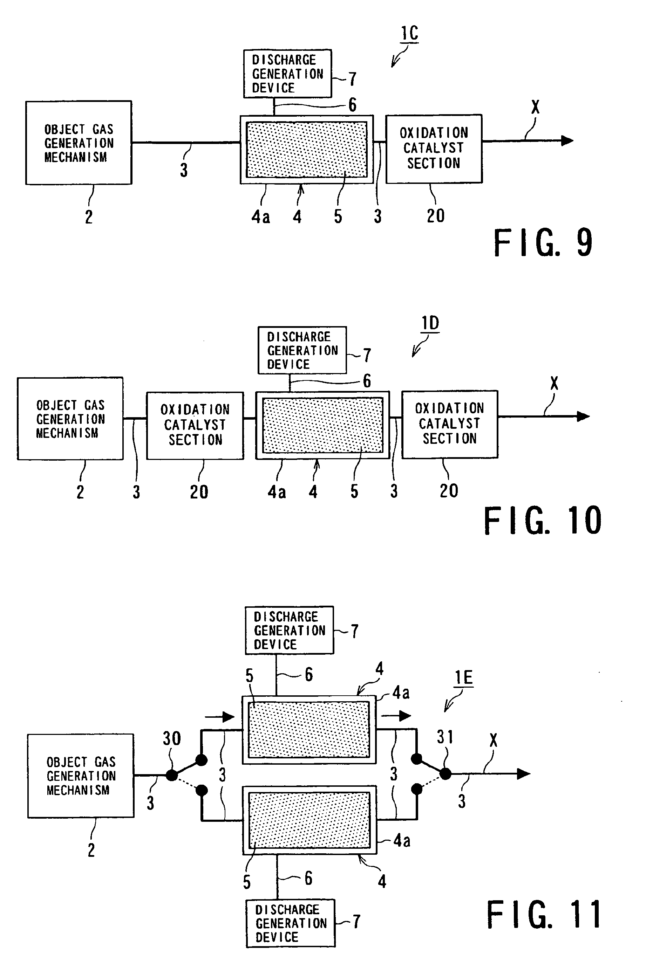

Further, the gas purifying system 1C shown in Fig. 9 is provided with the oxidation catalyst (oxidizing catalyst unit or section) 20 on the way of gas flow path 3 on the downstream side of the discharge reaction device 4 instead of installing the oxidation catalyst 20 inside the discharge reaction device 4 or on the upstream side thereof.

On the other hand, the gas purifying system 1D shown in Fig. 10 is provided with two oxidation catalysts (oxidizing catalyst units or sections) 20 for the object gas flow path 3, one being provided on the upstream side of the discharge reaction device 4 and the other one being provided on the downstream side thereof.

As described above, the gas purifying systems 1B, 1C and 1D can attain substantially the same effects or functions as those of the gas purifying system 1 of Fig. 1, as far as the oxidation catalyst 20 structure is provided on the way of the gas flow path 3 even if the oxidation catalyst 20 is not installed inside the discharge reaction device 4.

Furthermore in the gas purifying systems 1B, 1 C and 1 D, the oxidation catalyst 20 and the discharge reaction device 4 are disposed separately, so that it is possible to exchange only a required component or element without changing all the structure at the time of defective or repairs.

Fig. 11 is a schematic view showing a third aspect of the gas purifying system according to the present invention.

The gas purifying system 1E shown in Fig. 11 is different from the gas purifying system 1 of the first embodiment shown in Fig. 1 in that the gas flow path 3 is branched before the arrangement of a plurality of discharge reaction devices 4, which are arranged in parallel.

The other structure and operation of the gas purifying system 1E has substantially the same as those of the gas purifying system 1 of the first embodiment shown in Fig. 1. Therefore, the same reference numerals or symbols are added to the corresponding members or elements and the detailed explanation thereof is omitted herein.

The gas purifying system 1 E is provided with an upstream side switching element or section 30 for the gas flow path 3 on the upstream side of the discharge reaction devices 4, and the gas flow path 3 is branched at the switching section 30 in plural gas flow paths, for instance, two gas flow paths 3 as shown in Fig. 11. Each of the branched gas flow paths 3 is connected to each of the discharge reaction devices 4.

Further, the gas flow paths 3 for discharging the object gas X passing through the respective discharge reaction devices 4 are introduced and collected to a common downstream side switching section 31 at which these branched exhaust gas flow paths are combined as a common single gas flow path 3.

The upstream side switching section 30 and the downstream side switching section 31 are switched so as to flow the object gas through one selected discharge reaction section 4.

That is, the gas purifying system 1E is capable of selecting one of the discharge reaction devices 4 through which the object gas X to be purified flows so as to switch the discharge reaction device 4 periodically in accordance with gas flow path switching function of the upstream side switching section 30 and the downstream side switching section 31.

According to the structure of this embodiment, the gas purifying system 1E is switched in operation at a time when the PM amount trapped by the filter member 5 of a certain discharge reaction device 4 reaches to the fixed amount, the flow of the object gas X is switched by the upstream side switching section 30, i.e. switching the gas flow path 3 to another branched gas flow path 3. In accordance with this switching operation, the downstream side switching section 31 will be also changed.

Furthermore, when the PM amount trapped by the filter member 5 reaches to the fixed amount, air containing PM of an amount negligibly affecting the trapping amount of the PM is introduced to this one discharge reaction device 4. Then, the trapped PM in the filter member 5 is subjected to the combustion treatment by the low-temperature plasma generated from this air, and the PM trapping function can be recovered.

That is, one discharge reaction device 4 in which the PM is trapped by the filter member 5 is switched successively and alternately to the other discharge reaction device 4 in which the PM trapped by the filter member 5 is subjected to the combustion treatment by the low-temperature plasma.

More specifically, according to the gas purifying system 1E provided with a plurality of the discharge reaction devices 4 in which the gas flow path 3 through which the object gas X flows from the object gas generation mechanism 2 is branched into a plurality of paths in parallel by the upstream side switching section 30 and the downstream side switching section 31 so that the PM trapping function of the filter member 5 can be surely recovered by switching the respective discharge reaction devices 4 (i.e., branched flow paths) so that the PM amount trapped by the filter member 5 does not exceed the combustion treatment amount.

Moreover, according to the gas purifying system 1E, even if the concentration of the PM included in the object gas X to be purified is relatively large, it is possible to perform the combustion removal of the PM stably without lowering the PM trapping function of the filter member 5.

The gas purifying system 1 E may be capable of adopting a structure of no downstream side switching section 31 and, in this structure, the object gas X is discharged individually from the gas flow paths 3 connected to respective discharge reaction devices 4, or a structure in which the object gas X discharged from the respective discharge reaction devices 4 may be collected into single common gas flow path 3, directly.

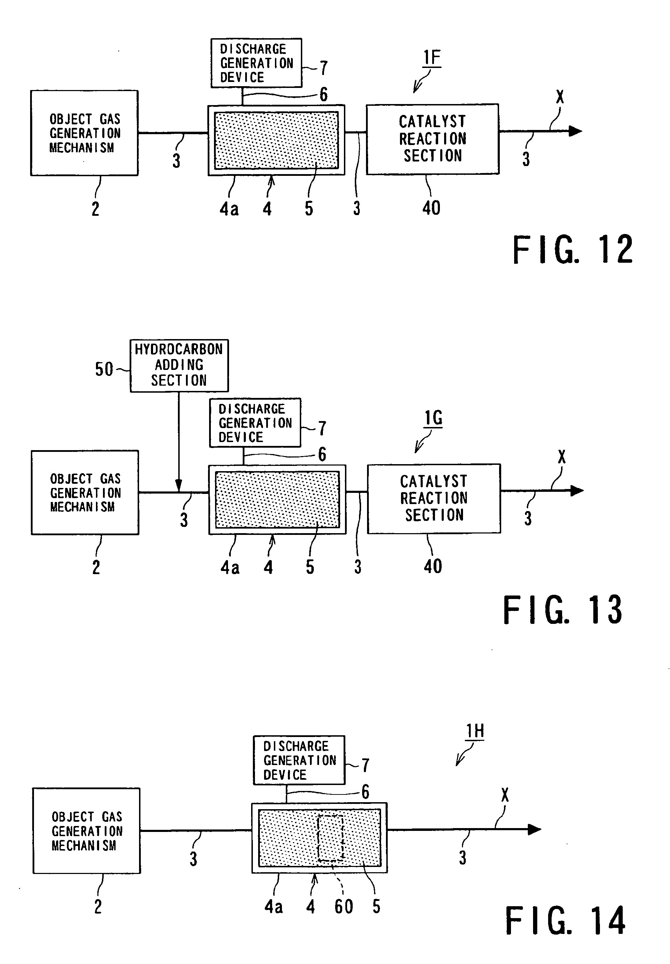

Fig. 12 is a schematic view showing a fourth aspect of the gas purifying system according to the present invention

The gas purifying system 1F shown in Fig. 12 is different from the gas purifying system 1 according to the first embodiment shown in Fig. 1 in that the structure of the gas purifying system 1F is provided with a catalytic reaction section 40 in the gas flow path 3 on the downstream side of the discharge reaction device 4. Another structure and operation of the gas purifying system 1F has substantially the same as those of the gas purifying system 1 of the first embodiment shown in Fig. 1, and accordingly, the same reference numerals or symbols are added to the same or identical structures or elements with the detailed explanation thereof being omitted herein.

According to the structure of this embodiment, in which the gas purifying system 1F is provided with the catalytic reaction section 40 in the gas flow path 3 on the downstream side of the discharge reaction device 4, when the NOx is included in the object gas X to be purified discharged from the object gas generating mechanism 2, the discharge reaction device 4 causes the material of carbon and the like included in the PM to be subjected to the combustion treatment, and at the same time, chemical species such as NO₂, partial oxidant [CHO] of hydrocarbon and the like are generated.

Then, the NOx reduction decomposition catalyst that attains catalytic activation function more strongly of the chemical species generated at the discharge reaction device 4 is filled in the catalytic reaction section 40. As to the catalyst filling the catalytic reaction section 40, for instance, γ *-* alumina accompanying no by-product of N₂O will be proposed.

The chemical species such as NO₂, partial oxidant [CHO] of the hydrocarbon and the like generated at the discharge reaction device 4 are introduced to the catalytic reaction section 40, in which these chemical species operate as the catalytic activation species, so that the NOx is subjected to the reduction decomposition without heating.

Further, the object gas X, from which the reduced and decomposed NOx is removed, is discharged outside the catalytic reaction section 40.

That is, the gas purifying system 1F of this embodiment is provided with the catalytic reaction section 40 provided with the NOx reduction decomposition catalyst disposed on the downstream side of the discharge reaction device 4, in which the NOx is subjected to the reduction decomposition to remove the NOx from the object gas X by using the chemical species generated from the hydrocarbon and the NOx at the discharge reaction device 4 as the catalyst activation species of the NOx reduction decomposition catalyst.

According to this structure, the gas purifying system 1 F is capable of obtaining the same effects and functions as those attained in the embodiment of Fig. 1, in which the NOx reduction decomposition catalyst function is added to the filter member 5. Thus, it becomes possible to perform inspection and exchange individually in every structure.

Fig. 13 is a schematic view showing a fifth aspect of the gas purifying system according to the present invention.

The gas purifying system 1 G shown in Fig. 13 is different from the gas purifying system 1F of the fourth embodiment shown in Fig. 12 in that the gas purifying system 1G is provided with a hydrocarbon adding (supplying) section or device 50 to the gas flow path 3 on the upstream side of the discharge reaction device 4. Another structures of the gas purifying system 1G is substantially the same as or identical to that of the gas purifying system 1E according to the fourth embodiment shown in Fig. 12, and accordingly, the same reference numerals or symbols are added to the corresponding structures or elements and the detailed explanation thereof is omitted herein.

The gas purifying system 1G of this embodiment is provided with the hydrocarbon adding section 50 in the upstream gas flow path 3 from the discharge reaction device 4.

The hydrocarbon adding section 50 supplies the hydrocarbon into the gas flow path 3. It is preferred to adopt a method of directly adding the hydrocarbon such as propane, propylene and the like, or a method for adding such gas-like hydrocarbon species such as propane, propylene and the like by once gasifying solid hydrocarbon species or liquid hydrocarbon species.

The thus added hydrocarbon species is introduced to the discharge reaction device 4, in which the catalyst activation species used for the NOx reduction decomposition is generated.

That is, according to the gas purifying system 1G of this embodiment, the NOx is decomposed and then removed while generating stable catalyst activation species more efficiently in the NOx reduction decomposition by adding the hydrocarbon species to the gas flow path 3.

Therefore, the gas purifying system 1 G is capable of removing the NOx efficiently while generating the catalyst activation species, even though the object gas X is, for example, a gas, containing few amount of hydrocarbon, such as exhaust gas generated during lean combustion period of the diesel engine.

Fig. 14 is a schematic view showing a sixth aspect of the gas purifying system according to the present invention.

The gas purifying system 1H shown in Fig. 14 is different from the gas purifying system 1A of the second embodiment shown in Fig. 7 in that the gas purifying system 1 H is provided with photocatalyst 60 instead of the oxidation catalyst 20 in the discharge reaction device 4. Another structure of the gas purifying system 1H is substantially the same as or identical to that of the gas purifying system 1A of the embodiment shown in Fig. 7, and accordingly, the same reference numerals or symbols are added to the corresponding structures or elements.

The gas purifying system 1H is provided with photocatalyst 60 such as TiO₂ and the like in addition to the filter member 5 inside the discharge reaction device 4, the photocatalyst 60 being disposed independently or being carried by the filter member 5.

For this reason, when discharge light as well as discharge plasma Y is generated inside the discharge reaction device 4, the photocatalyst 60 is activated in accordance with the operation of the generated discharge light even in a case of a temperature in a low temperature region such as 200°C , as well as a high temperature, in the discharge reaction device 4.

That is, in the gas purifying system 1H, the PM trapped by the filter member 5 in the inside section of the discharge reaction device 4 is burned in accordance with the operation of the photocatalyst 60 activated through the operation of the discharge light in addition to the radical oxide generated through the operation of the discharge plasma.

Thus, the gas purifying system 1H is capable of performing the combustion treatment of the PM more efficiently even in the case of the low temperature in the discharge reaction device 4, in addition to the advantageous effects of the gas purifying system 1A shown in Fig. 7.

Therefore, for example, in a case where the automobile exhaust gas, i.e. object gas X to be purified in this invention, has a low temperature, at an automobile engine starting time, it becomes possible to apply the gas purifying system 1H, making it possible to perform the combustion treatment of the PM more efficiently.

The gas purifying systems 1A, 1B, 1C, 1D, 1E, 1F, 1G and 1H of the structures mentioned above may be composed as multiple or composite structures. For example, the gas purifying system permits a plurality of discharge reaction devices 4 to install in the gas flow path 3 in parallel. Further, there may be provided the catalytic reaction section 40, the hydrocarbon adding section 50 or the oxidation catalyst 20 in the gas flow path 3.

Furthermore, as an alternation, it is preferred that the discharge reaction device 4 may be constituted as one unit, and a plurality of such units may be arranged in parallel or in series so as to constitute the gas purifying systems 1A, 1B, 1C, 1D, 1E, 1F, 1G and 1H.

## Claims

1. A gas purifying system (1) for purifying an object gas (X) comprising:
a gas flow line (3) through which the object gas (X) to be purified flows from an object gas generation mechanism;
a discharge reaction device (4) comprising a casing provided on a way of the gas flow line (3);
a filter member (5) disposed in the discharge reaction device (4) having a structure for trapping particulate matter (PM) contained in the object gas (X) during a time when the object gas (X) passes through the filter member (5);
an electrode (12) disposed inside the filter member (5); and
a discharge generation device (7) operatively connected to the discharge reaction device (4) **characterized in that**
said discharge generation device (7) is provided for causing an electric field and generating a low temperature discharge plasma (Y) in the filter member (5) disposed in the discharge reaction device (4), the filter member being regenerative by means of the low temperature discharge plasma,
said filter member (5) is composed of a dielectric material having dielectric constant of not less than 3, and
an oxidizing catalyst (20) is further arranged to the gas flow line (3) at the downstream side of the discharge reaction device (4) with respect to the flow of the object gas (X), **in that** the system further comprises
a catalyst reaction unit (40) provided at the gas flow line (3) on a downstream side of the discharge reaction device (4) for reducing and decomposing nitrogen oxide contained in the object gas (X),
a hydrocarbon adding device (50) disposed to the gas flow line (3) on the upstream side of the discharge reaction device (4) so as to apply gaseous hydrocarbon to the object gas (X) flowing through the gas flow line (3),
wherein said gaseous hydrocarbon is formed by gasifying solid or liquid state hydrocarbon by the hydrocarbon adding device (50),
and **in that** the gas flow line is a main gas flow line (3), said main gas flow line (3) having a switching portion (30) from which a plurality of gas flow branch lines (3) extend; and
further comprising a plurality of said discharge reaction devices (4), each being provided at an intermediate portion of each of the gas flow branch lines (3);
wherein the filter member (5) is disposed in each of the discharge reaction devices (4);
said discharge generation device (7) is operatively connected to each of the discharge reaction devices (4); and
a switching means is arranged for the switching portion (30) provided on the gas flow main line (3) for selectively switching the gas flow branch lines (3).

2. The gas purifying system according to claim 1, wherein a further oxidizing catalyst (20) is disposed at an upstream side of the discharge reaction device (4).

3. The gas purifying system according to claim 1, wherein said filter member (5) has a block structure composed of a plurality of packed solid materials.

4. The gas purifying system according to claim 1, wherein said filter member (5) has a block structure composed of fibrous material.

5. The gas purifying system according to claim 1, wherein said filter member (5) has a honey-comb structure.

6. The gas purifying system according to claim 1, wherein said filter member (5) has a monolith structure.

7. The gas purifying system according to claim 1, wherein said dielectric material is a ceramics.

8. The gas purifying system according to claim 1, wherein said plurality of gas flow branch lines (3) are combined at a portion (31) of the gas flow main line (3) on the downstream side of the discharge reaction devices (4).

9. A gas purifying method of purifying an object gas (X) in a gas purifying system according to any one of claims 1 to 8 comprising the steps of:
arranging a discharge reaction device (4), provided with a filter member (5), on a way of a gas flow line (3) through which the object gas (X) including particulate matter (PM) to be treated flows;
trapping particulate matter (PM) in the object gas (X) by the filter member (5); and
generating an electric field in an area of the discharge reaction device (4) in which the filter member (5) is disposed and generating a low temperature discharge plasma (Y) in the filter member (5); the filter member being regenerative by means of the low temperature discharge plasma.

## Patentansprüche

1. Gasreinigungssystem (1) zum Reinigen eines Objektgases (X) umfassend:
eine Gasflussleitung (3), durch die das zu reinigende Objektgas (X) von einem Objektgaserzeugungsmechanismus fließt;
eine Entladungsreaktionseinrichtung (4), die ein an einem Weg der Gasflussleitung (3) vorgesehenes Gehäuse umfasst;
ein Filterelement (5), das in der Entladungsreaktionseinrichtung (4) angeordnet ist und eine Struktur zum Einfangen von in dem Objektgas (X) enthaltenen Schwebstoffteilchen (PM) während einer Zeit, in der das Objektgas (X) durch das Filterelement (5) tritt, aufweist;
eine Elektrode (12), die innerhalb des Filterelements (5) angeordnet ist; und
eine Entladungserzeugungseinrichtung (7), die mit der Entladungsreaktionseinrichtung (4) in Wirkverbindung steht, **dadurch gekennzeichnet, dass**
die Entladungserzeugungseinrichtung (7) dafür vorgesehen ist, in dem in der Entladungsreaktionseinrichtung (4) angeordneten Filterelement (5) ein elektrisches Feld zu bewirken und ein Tieftemperaturentladungsplasma (Y) zu erzeugen, wobei das Filterelement durch das Tieftemperaturentladungsplasma regenerierbar ist,
das Filterelement (5) aus einem dielektrischen Material mit einer Dielektrizitätskonstante von nicht weniger als 3 besteht, und
ein Oxidationskatalysator (20) ferner an der Gasflussleitung (3) an der stromabwärtigen Seite der Entladungsreaktionseinrichtung (4) mit Bezug auf den Fluss des Objektgases (X) angeordnet ist,
dass das System ferner umfasst:
eine Katalysatorreaktionseinheit (40), die an der Gasflussleitung (3) an einer stromabwärtigen Seite der Entladungsreaktionseinrichtung (4) zum Verringern und Abbauen von in dem Objektgas (X) enthaltenem Stickstoffoxid vorgesehen ist,
eine Kohlenwasserstoffbeimischeinrichtung (50), die an der Gasflussleitung (3) an der stromaufwärtigen Seite der Entladungsreaktionseinrichtung (4) so angeordnet ist, dass sie dem durch die Gasflussleitung (3) fließenden Objektgas (X) gasförmigen Kohlenwasserstoff zuführt,
wobei der gasförmige Kohlenwasserstoff durch Vergasen von Kohlenwasserstoff in festem oder flüssigem Zustand durch die Kohlenwasserstoffbeimischeinrichtung (50) gebildet ist,
und dass die Gasflussleitung eine Hauptgasflussleitung (3) ist, wobei die Hauptgasflussleitung (3) einen Schaltabschnitt (30) aufweist, von dem sich mehrere Gasflusszweigleitungen (3) erstrecken; und
ferner umfassend mehrere der Entladungsreaktionseinrichtungen (4), von denen jede an einem Zwischenabschnitt jeder der Gasflusszweigleitungen (3) vorgesehen ist;
wobei das Filterelement (5) in jeder der Entladungsreaktionseinrichtungen (4) angeordnet ist;
die Entladungserzeugungseinrichtung (7) mit jeder der Entladungsreaktionseinrichtungen (4) in Wirkverbindung steht; und
ein Schaltmittel für den an der Gasflusshauptleitung (3) vorgesehenen Schaltabschnitt (30) zum wahlweisen Schalten der Gasflusszweigleitungen (3) angeordnet ist.

2. Gasreinigungssystem nach Anspruch 1, bei dem ein weiterer Oxidationskatalysator (20) an einer stromaufwärtigen Seite der Entladungsreaktionseinrichtung (4) angeordnet ist.

3. Gasreinigungssystem nach Anspruch 1, bei dem das Filterelement (5) eine Blockstruktur aufweist, die aus mehreren gepackten Feststoffmaterialien besteht.

4. Gasreinigungssystem nach Anspruch 1, bei dem das Filterelement (5) eine Blockstruktur aufweist, die aus Fasermaterial besteht.

5. Gasreinigungssystem nach Anspruch 1, bei dem das Filterelement (5) eine Wabenstruktur aufweist.

6. Gasreinigungssystem nach Anspruch 1, bei dem das Filterelement (5) eine Monolithstruktur aufweist.

7. Gasreinigungssystem nach Anspruch 1, bei dem das dielektrische Material eine Keramik ist.

8. Gasreinigungssystem nach Anspruch 1, bei dem die mehreren Gasflusszweigleitungen (3) an einem Abschnitt (31) der Gasflusshauptleitung (3) an der stromabwärtigen Seite der Entladungsreaktionseinrichtungen (4) verbunden sind.

9. Gasreinigungsverfahren zum Reinigen eines Objektgases (X) in einem Gasreinigungssystem nach einem der Ansprüche 1 bis 8, das die folgenden Schritte umfasst:
Anordnen einer mit einem Filterelement (5) versehenen Entladungsreaktionseinrichtung (4) an einem Weg einer Gasflussleitung (3), durch die das zu behandelnde Objektgas (X), das Schwebstoffteilchen (PM) enthält, fließt;
Einfangen von Schwebstoffteilchen (PM) in dem Objektgas (X) durch das Filterelement (5); und
Erzeugen eines elektrischen Felds in einem Bereich der Entladungsreaktionseinrichtung (4), in dem das Filterelement (5) angeordnet ist, und Erzeugen eines Tieftemperaturentladungsplasmas (Y) in dem Filterelement (5), wobei das Filterelement durch das Tieftemperaturentladungsplasma regenerierbar ist.

## Revendications

1. Système de purification de gaz (1) pour purifier un gaz objet (X) comprenant :
un conduit d'écoulement de gaz (3) dans lequel le gaz objet (X) destiné à être purifié s'écoule depuis un mécanisme de production de gaz objet ;
un dispositif de réaction de décharge (4) comprenant un boîtier disposé sur un trajet du conduit d'écoulement de gaz (3) ;
un membre de filtre (5) disposé dans le dispositif de réaction de décharge (4) ayant une structure pour piéger les matières particulaires (MP) contenues dans le gaz objet (X) pendant la durée au cours de laquelle le gaz objet (X) traverse le membre de filtre (5) ;
une électrode (12) disposée à l'intérieur du membre de filtre (5) ; et
un dispositif de production de décharge (7) relié de manière fonctionnelle au dispositif de réaction de décharge (4) **caractérisé en ce que**
ledit dispositif de production de décharge (7) est prévu pour produire un champ électrique et générer un plasma à décharge basse température (Y) dans le membre de filtre (5) disposé dans le dispositif de réaction de décharge (4), le membre de filtre étant régénératif au moyen du plasma à décharge basse température ;
ledit membre de filtre (5) est composé d'un matériau diélectrique ayant une constante diélectrique non inférieure à 3, et
un catalyseur oxydant (20) est disposé en outre sur le conduit d'écoulement de gaz (3) du coté aval du dispositif de réaction de décharge (4) par rapport à l'écoulement du gaz objet (X), **en ce que** le système comprend en outre
une unité de réaction catalytique (40) disposée sur le conduit d'écoulement de gaz (3) d'un côté aval du dispositif de réaction de décharge (4) pour réduire et décomposer un oxyde d'azote contenu dans le gaz objet (X),
un dispositif d'addition d'hydrocarbure (50) disposé sur le conduit d'écoulement de gaz (3) du côté amont du dispositif de réaction de décharge (4) de manière à appliquer un hydrocarbure gazeux au gaz objet (X) s'écoulant dans le conduit d'écoulement de gaz (3),
où ledit hydrocarbure gazeux est formé par gazéification d'un hydrocarbure à l'état solide ou liquide par le dispositif d'addition d'hydrocarbure (50),
et **en ce que** le conduit d'écoulement de gaz est un conduit d'écoulement de gaz principal (3), ledit conduit d'écoulement de gaz principal (3) ayant une partie de commutation (30) depuis laquelle s'étend une pluralité de conduits de ramification d'écoulement de gaz (3), et
comprenant en outre une pluralité desdits dispositifs de réaction de décharge (4), disposés chacun au niveau d'une partie intermédiaire de chacun des conduits de ramification d'écoulement de gaz (3) ;
où le membre de filtre (5) est disposé dans chacun des dispositifs de réaction de décharge (4) ;
ledit dispositif de production de décharge (7) est relié de manière fonctionnelle à chacun des dispositifs de réaction de décharge (4) ; et
un moyen de commutation est disposé pour la partie de commutation (30) prévue sur le conduit principal d'écoulement de gaz (3) pour commuter sélectivement les conduits de ramification d'écoulement de gaz (3).

2. Système de purification de gaz selon la revendication 1 où un catalyseur oxydant (20) supplémentaire est disposé d'un côté amont du dispositif de réaction de décharge (4).

3. Système de purification de gaz selon la revendication 1 où ledit membre de filtre (5) a une structure en bloc composée d'une pluralité de matériaux solides formant garnissage.

4. Système de purification de gaz selon la revendication 1 où ledit membre de filtre (5) a une structure en bloc composée d'un matériau fibreux.

5. Système de purification de gaz selon la revendication 1 où ledit membre de filtre (5) a une structure en nid d'abeilles.

6. Système de purification de gaz selon la revendication 1 où ledit membre de filtre (5) a une structure monolithique.

7. Système de purification de gaz selon la revendication 1 où ledit matériau diélectrique est une céramique.

8. Système de purification de gaz selon la revendication 1 où ladite pluralité de conduits de ramification d'écoulement de gaz (3) sont combinés au niveau d'une partie (31) du conduit principal d'écoulement de gaz (3) du côté aval des dispositifs de réaction de décharge (4).

9. Système de purification de gaz pour purifier un gaz objet (X) dans un système de purification de gaz selon l'une quelconque des revendications 1 à 8 comprenant les étapes de :
disposer un dispositif de réaction de décharge (4), muni d'un membre de filtre (5), sur un trajet d'un conduit d'écoulement de gaz (3) dans lequel circule le gaz objet (X) incluant des matières particulaires (MP) destiné à être traité ;
piéger les matières particulaires (MP) dans le gaz objet (X) par le membre de filtre (5) ; et
produire un champ électrique dans une zone du dispositif de réaction de décharge (4) dans laquelle le membre de filtre (5) est disposé et générer un plasma à décharge basse température (Y) dans le membre de filtre (5) ; le membre de filtre étant régénératif au moyen du plasma à décharge basse température.
